# EUROPEAN PATENT SPECIFICATION

(11) **EP 1 775 159 B1**
(45) Date of publication and mention of the grant of the patent: **02.12.2009**
(21) Application number: 06021310.5
(22) Date of filing: 11.10.2006
(51) Int. Cl.: B60P 1/64

(54) **Apparatus and process for automatic connection of quick-release couplings for hydraulic power consuming units on trucks having interchangeable bodies**
Vorrichtung und Verfahren für automatische Verbindung von Schnellkupplungen eines hydraulisch angetriebenen Aggregates an einem Nutzfahrzeug mit Wechselaufbauten
Procédé et dispositif pour connexion automatique de raccords rapides d'un appareil hydraulique dans un véhicule de transport avec caisses interchangeables

(30) Priority: 11.10.2005 IT MI20051907
(43) Date of publication of application: 18.04.2007
(73) Proprietor: Pris-Mag S.r.l., 20059 Vimercate MI (IT)
(72) Inventor: Sala, Alessandro, 20059 Oreno di Vimercate (MI) (IT)
(74) Representative: Premru, Rok

(56) References cited:
- EP-A1- 0 439 613
- GB-A- 1 581 484
- US-A- 5 816 621

## Description

An apparatus and a process for automatic connection of quick couplings for hydraulic power consuming units on trucks having interchangeable bodies are hereby disclosed.

The disclosure further addresses a truck for transportation of interchangeable bodies as well as an interchangeable body, both comprising such apparatus.

Specifically, interchangeable bodies are increasingly used, which feature hydraulic power consuming units (hydraulic cranes, dump bodies, hydraulic machines in general) on a demountable base.

For construction requirements, the hydraulic power consuming units of interchangeable bodies are powered by a truck-mounted hydraulic pump.

Therefore, each time a body is mounted to the truck, the hydraulic circuit of the units on the body has to be connected with the hydraulic power circuit on the truck.

Similarly, each time a body is demounted from the truck, the hydraulic circuit on the body has to be disconnected from the hydraulic circuit on the truck.

In prior art, these connections and disconnections of the two hydraulic circuits are performed manually, using flexible hydraulic lines having flat faced quick - release couplings at their ends, such as those currently sold by FASTER S.p.a., based in Italy.

EP-A-0 439 613 discloses a truck for transportation of interchangeable bodies according to the preamble of claim 1, an interchangeable body according to the preamble of claim 8 and a process for connecting a first plurality of quick-release couplings which are joined to fluid supplying means integral with the truck, to a second plurality of quick-release couplings, joined to hydraulic power consuming units of an interchangeable body according to the preamble of claim 14.

Hydraulic units installed in demountable bodies have high back - pressures, which make manual coupling difficult.

Reduced section couplings may be used for easier manual coupling, but this would increase pressure losses through the whole hydraulic circuit, thereby causing overheatings and reducing the overall system efficiency.

Furthermore, the hydraulic circuit connecting flexible hoses may interfere with other devices installed on the truck.

Therefore, the main object of this invention is to propose a solution to prior art problems and particularly to those set out hereinbefore.

This object is fulfilled by a truck as defined in claim 1, a body as defined in claim 8 and a process as defined in claim 14.

Further advantages may be obtained by the additional features of the dependent claims.

A possible embodiment of an apparatus and a process as claimed in the claims, will be described hereinafter with reference to the attached drawings, where:
- Fig. 1 is a diagrammatic view of a truck having an interchangeable body;
- Fig. 2 is a perspective view of an apparatus for horizontally displacing a body lying on a chassis during demounting/mounting;

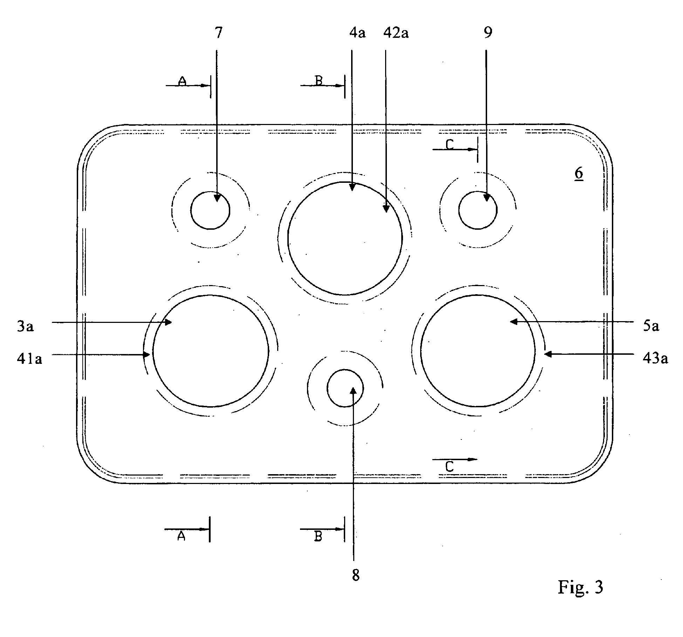

- Fig. 3 is a plan view of a plate housing hydraulic quick - release couplings and centering means;

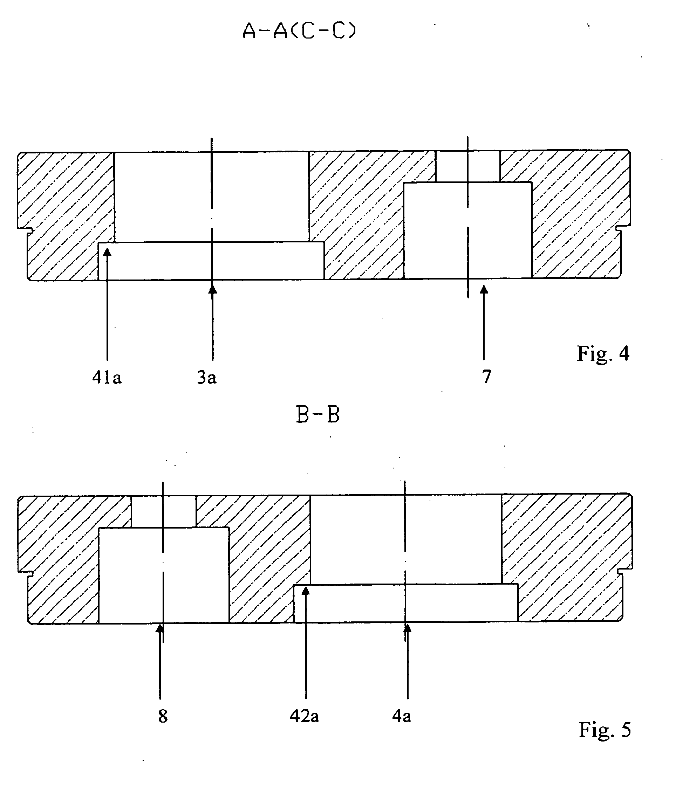

- Fig. 4 is a first sectional view of the plate of Fig. 3;
- Fig. 5 is a second sectional view of the plate of Fig. 3;

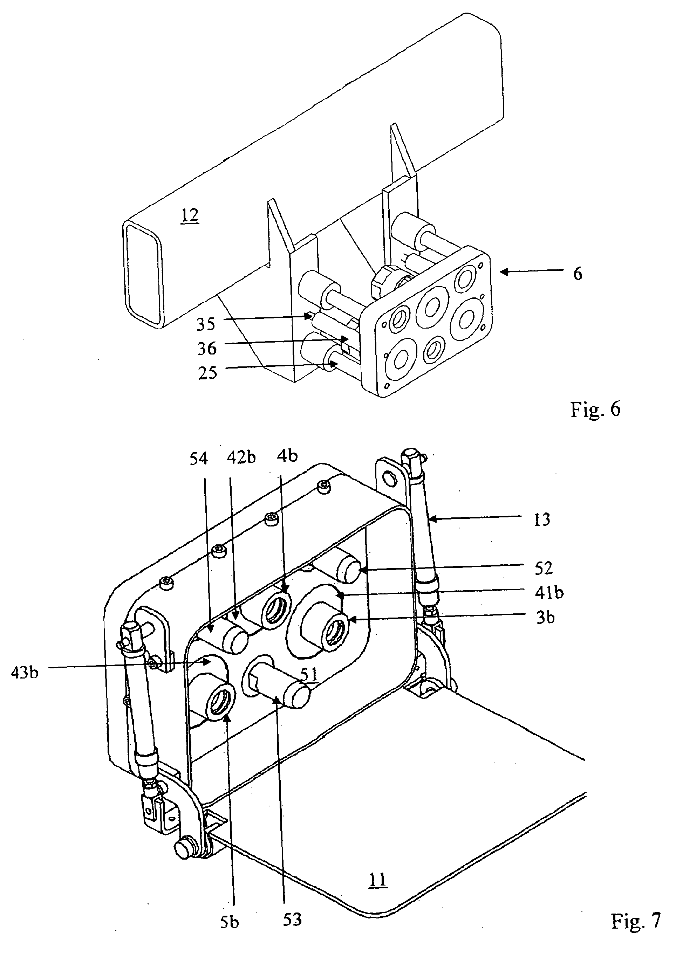

- Fig. 6 is a perspective view of a detail of a truck, showing a plate housing hydraulic quick - release couplings, mounted beneath the bearing surface of the truck chassis;
- Fig. 7 is a perspective view of a detail of a trailer, showing a plate housing hydraulic quick - release couplings;

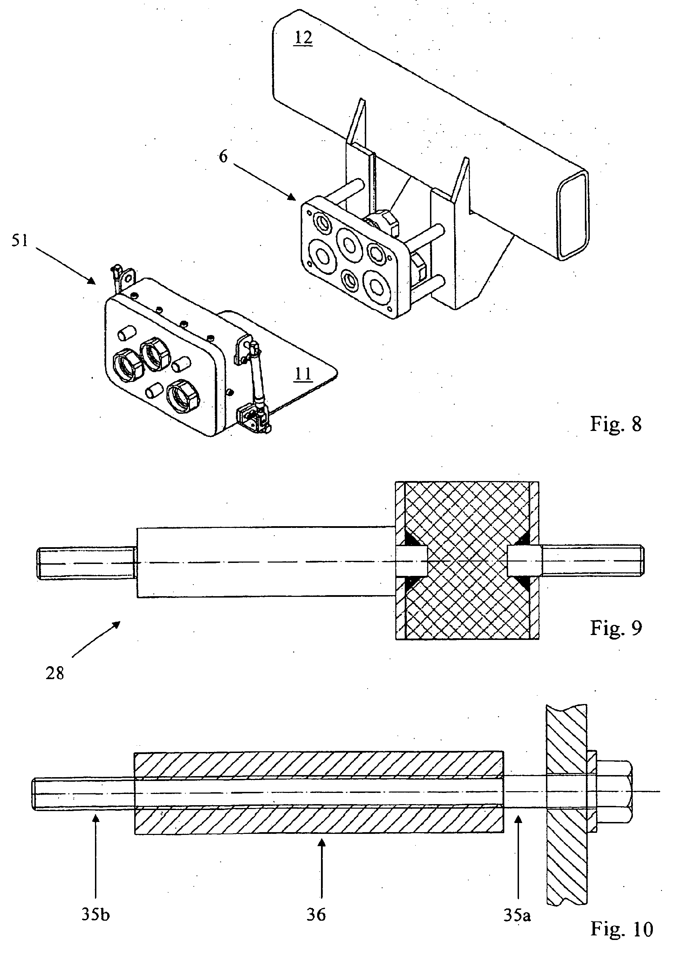

- Fig. 8 shows the relative positions of the plates during connection;
- Fig. 9 is an enlarged view of a silent block;
- Fig. 10 shows a mean used in the apparatus of Fig. 6 to adjust the plate stroke;

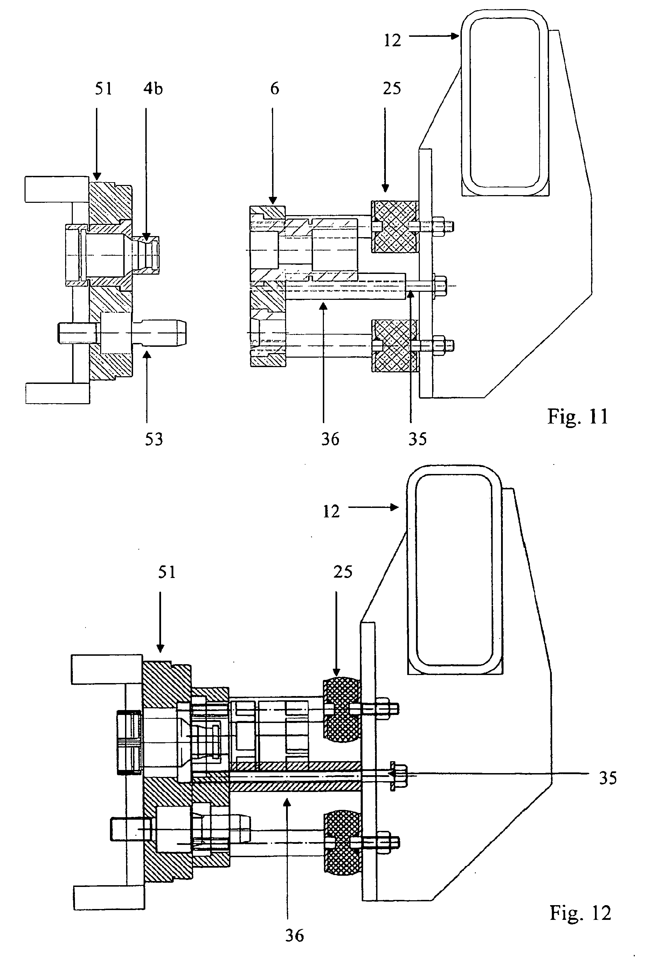

- Fig. 11 is a longitudinal section of a detail of the truck and the body before attachment of the body to the truck;
- Fig. 12 is a longitudinal section of a detail of the truck and the body, with the body attached to the truck.

Referring to the drawings, numeral 1 marks a truck for transportation of interchangeable bodies 2.

The truck 1 comprises a chassis 12, which defines a loading plane n, and a plurality of quick - release couplings 3a, 4a, 5a - connected to a hydraulic power circuit on the truck - for connection with hydraulic power consuming units of interchangeable bodies 2.

The truck 1 has a plate 6 (female plate), joined to the chassis 12 of the truck 1, which is orthogonal to the plane π defined by the chassis 12 of the truck and parallel to the axes of the truck 1.

In a possible embodiment, the plate 6 is located beneath the loading plane of the chassis 12.

The plate 6 houses a first plurality of quick- release couplings 3a, 4a, 5a (female couplings in the illustrated embodiment), which are aligned orthogonal to the plane n of the plate 6.

Furthermore, the plate 6 is provided with centering means 7, 8, 9, whose function will be better explained hereinafter.

In the illustrated embodiment, the centering means 7, 8, 9 are holes whose axis is orthogonal to the plane of the plate 6.

Preferably, shock absorber means 25 are also provided to absorb shocks and vibrations orthogonal to the plane of the plate, occurring during mounting/demounting of the body.

In the illustrated embodiment, there are four shock absorber means, of the type known as "silent - blocks".

More preferably, means 35, 36 are further provided to restrict the stroke of the plate 6 orthogonally to the plane of the plate.

As better explained below, this feature limits compressive and tensile stresses on shock absorbers during mounting/demounting.

In the illustrated embodiment, these means 35, 36 for restricting the stroke of the first plate 6 include at least two rods 35.

Each rod 35 has a first threaded end 35a ending with a lock member, and joined to the chassis 12 of the truck 1, and a second end 35b which extends through the plate 6.

In the illustrated embodiment, the lock member is a hexagonal head designed to be engaged by a wrench.

Hence the maximum distance between the female plate 6 and the point of attachment to the chassis 12 may be adjusted.

The means 35, 36 for restricting the stroke of the truck - mounted plate 6 may further include a bush 36, mounted on each rod 35.

In the illustrated embodiment, the bush 36 has threads for joining it to the rod 35, to prevent vibrations and noise.

The above disclosed truck is adapted to receive an interchangeable body 2 having hydraulic power consuming units and comprising a plurality of hydraulic quick - release couplings 3b, 4b, 5b for supplying hydraulic power to such hydraulic power consuming units (not shown).

Such body 2 comprises a plate 51 (male plate) which is orthogonal to the loading π of the body 2 and orthogonal to the longitudinal extension of the body, and houses quick - release couplings 3b, 4b, 5b (male couplings in the illustrated embodiment), which are orthogonally aligned to the plane of the plate 51.

The quick - release couplings 3b, 4b, 5b of the plate 51 on the body 2 are designed to engage the quick - release couplings 3a, 4a, 5a on the truck 1.

The plate 51 further comprises centering means 52, 53, 54 which are orthogonally aligned to the plane π of the plate 51.

In the illustrated embodiment, the centering means 52, 53, 54 are pins designed to engage the holes 7, 8, 9 of the plate 6 on the truck 1 during the attachment of the body to the truck.

In an alternative embodiment, the body 2 has shock absorber means 25 for absorbing shocks and vibrations on the plate 51, orthogonally to the plane of the plate itself.

In this case, the body 2 may further have means for restricting the stroke of the plate 51 orthogonally to the plane of the plate.

The quick - release couplings 3a, 4a, 5a; 3b, 4b, 5b of the plate 6 on the truck 1 and of the plate 51 on the interchangeable body 2 have abutment collars 41a, 42a, 43a; 41b, 42b, 43b that allow to discharge the forces generated upon connection of the male and female couplings on their respective plates.

The quick - release couplings 3a, 4a, 5a; 3b, 4b, 5b of the plate 6 on the truck 1 and of the plate 51 on the demountable body 2 are preferably flat - faced quick - release couplings.

These quick - release couplings have completely closed ends in the non connected state.

These couplings are preferred because no oil leaks out of them during connection and disconnection.

It shall be understood that these male and female couplings 3a, 4a, 5a; 3b, 4b, 5b have no mutual locking means, as connection therebetween is maintained until the body 2 is attached to the chassis 12 of the truck 1.

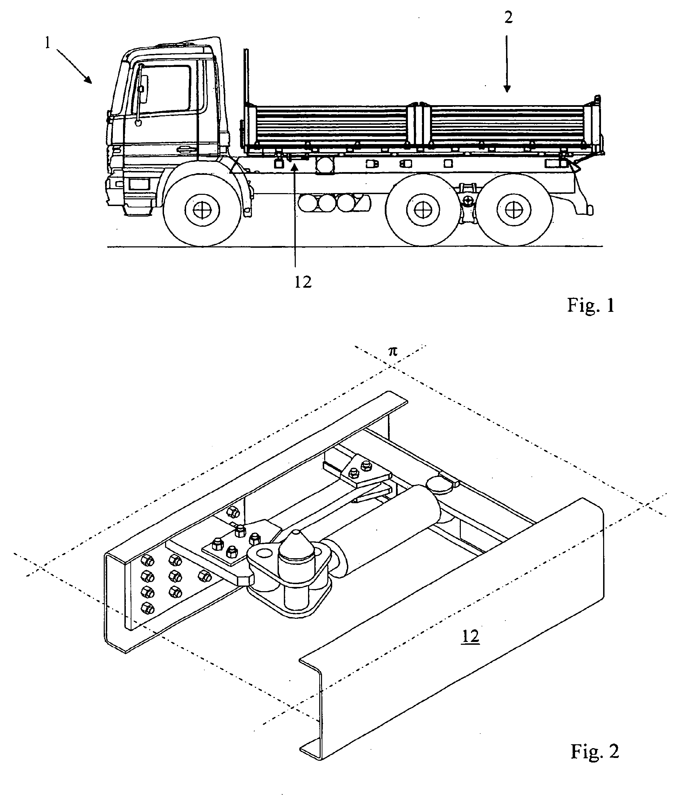

In the preferred embodiment, the attachment and coupling step is performed by a horizontal translational motion controlled by a piston - operated cam, as shown in Fig. 2.

Preferably, the plate 51 of the body 2 has a protective cover 11, which can be actuated by linear or rotary actuators 13 (e.g. a pair of air pistons) during mounting and demounting of the body 2.

Using the track and body described above, the quick - release couplings for the hydraulic power consuming units may be automatically connected and disconnected upon mounting and demounting of the body.

Therefore, a process may be carried out for connecting a first plurality of quick - release couplings 3a, 4a, 5a, which are joined to fluid supplying means integral with the truck 1, to a second plurality of quick - release couplings 3b, 4b, 5b, which are joined to hydraulic power consuming units of an interchangeable body 2, this process comprising the steps of:
- lowering a body 2 onto a chassis 12 of a truck 1;
- horizontally translating the body 2 on the chassis 12 of the truck 1 until the body 2 is attached to the chassis, while maintaining the first plurality of quick - release couplings 3a, 4a, 5a aligned with the second plurality of quick - release couplings 3b, 4b, 5b during the horizontal translation, so that connection of the quick - release couplings 3a, 4a, 5a of the truck I with the quick - release couplings 3b, 4b, 5b of the body 2 occurs during the last section of the horizontal stroke of the body 2.

Reverse operation provides automatic disconnection of the quick - release couplings 3b, 4b, 5b of the body 2 from the quick - release couplings 3a, 4a, 5a of the truck 1.

## Claims

1. A truck (1) for transportation of interchangeable bodies (2), comprising a chassis (12) and a plurality of quick - release couplings (3a, 4a, 5a) for connection with hydraulic power consuming units of interchangeable bodies (2), **characterized in that** it has a plate (6), joined to the chassis (12) of said truck (1), said plate (6) being orthogonal to the plane (n) defined by the chassis (12) of the truck and parallel to the axes of the truck (1), said plate housing a first plurality of quick - release couplings (3a, 4a, 5a), said plate (6) further having centering means (7, 8, 9).

2. A truck (1) as claimed in claim 1, wherein shock absorber means (25) are provided for absorbing shocks and vibrations on the plate (6), orthogonally to the plane of the plate itself.

3. A truck as claimed in claim 1 or 2, wherein said quick - release couplings (3a, 4a, 5a) have an abutment collar (41 a, 42a, 43a).

4. A truck as claimed in claim 1 or 2 or 3, wherein said quick - release couplings (3a, 4a, 5a) are flat - faced quick - release couplings.

5. A truck as claimed in claim 1 to 4, wherein means (35, 36) are further provided for restricting the stroke of said plate (6) orthogonally to the plane of the plate itself.

6. A truck as claimed in claim 5, wherein said means (35, 36) for restricting the stroke of said first plate (6) comprise at least two rods (35), each rod (35) having a first threaded end (35a) joined to the chassis (12) of said truck (1) and ending with a lock member, and a second end (35b) which extends through said plate (6).

7. A truck as claimed in claim 6, wherein said means (35, 36) for restricting the stroke of said first plate (6) comprise a bush (36) mounted on each rod (35).

8. An interchangeable body (2) for a truck (1), having hydraulic power consuming units and comprising a plurality of quick - release hydraulic couplings (3b, 4b, 5b) for connection with the hydraulic power circuit of a truck, **characterized in that** it includes a plate (51) attached to the chassis of said body (2), orthogonal with respect to the loading plane π) of said body (2) and orthogonal to the longitudinal extension of the body, which houses said quick - release couplings (3b, 4b, 5b), said plate (51) being provided with centering means (52, 53, 54).

9. A body as claimed in claim 8, wherein shock absorber means (25) are provided for absorbing shocks and vibrations on said plate (51), orthogonally to the plane (n) of the plate itself.

10. A body as claimed in claim 8 or 9, wherein means are further provided for restricting the stroke of said plate (51) orthogonally to the plane of the plate itself.

11. A body as claimed in claim 8, 9 or 10, wherein said quick - release couplings (3b, 4b, 5b) on the second plate (6) are provided with an abutment collar (41b, 42b, 43b).

12. A body as claimed in any one of the preceding claims, wherein said quick - release couplings (3b, 4b, 5b) are flat - faced quick - release couplings.

13. A body as claimed in any one of the preceding claims, wherein said plate (6) is provided with a protective cover (11), which can be actuated by linear (13) or rotary actuators.

14. A process for connecting a first plurality of quick - release couplings (3a, 4a, 5a), which are joined to fluid supplying means integral with the truck (1), to a second plurality of quick - release couplings (3b, 4b, 5b), joined to hydraulic power consuming units of an interchangeable body (2), comprising the steps of:
- lowering a body (2) onto a chassis (12) of a truck (1);
- horizontally translating said body (2) on said chassis (12) of said truck (1) until said body (2) is attached to said chassis (12) **characterised by** maintaining said first plurality of quick - release couplings (3a, 4a, 5a) aligned with said second plurality of quick - release couplings (3b, 4b, 5b) during said horizontal translation, so that connection of said quick - release couplings (3a, 4a, 5a) of said truck (1) with said quick - release couplings (3b, 4b, 5b) of said body (2) occurs during the last section of the horizontal stroke of said body (2).

## Patentansprüche

1. Lastkraftwagen (1) zum Transportieren eines Wechsel-Aufbaus (2), aufweisend ein Fahrwerk (12) und eine Mehrzahl von Schnellkupplungen (3a, 4a, 5a) zum Verbinden mit hydraulischen Verbraucheraggregaten von Wechsel-Aufbauten (2), **dadurch gekennzeichnet, dass** der Lastwagen eine mit dem Fahrwerk (12) des Lastkraftwagens (1) verbundene Anschlussplatte (6) aufweist, die orthogonal zu der vom Fahrwerk (12) des Lastkraftwagens (1) definierten Ebene (π) und parallel zu den Achsen des Lastkraftwagens (1) angeordnet ist, wobei die genannte Anschlussplatte eine Mehrzahl von Schnellkupplungen (3a, 4a, 5a) aufnimmt, und wobei die genannte Anschlussplatte (6) ferner Zentriermittel (7, 8, 9) hat.

2. Lastkraftwagen (1) nach Anspruch 1, wobei zum Dämpfen von Stößen und Erschütterungen an der Anschlussplatte (6) orthogonal zu deren Ebene Stoßdämpfermittel (25) vorgesehen sind.

3. Lastkraftwagen (1) nach Anspruch 1 oder 2, wobei die Schnellkupplungen (3a, 4a, 5a) eine Stützrosette (41 a, 42a, 43a) aufweist.

4. Lastkraftwagen (1) nach Anspruch 1 oder 2 oder 3, wobei die Schnellkupplungen (3a, 4a, 5a) flache Stirnflächen aufweisende Schnellkupplungen sind.

5. Lastkraftwagen (1) nach einem der Ansprüche 1 bis 4, wobei ferner Mittel (35, 36) vorgesehen sind, um den Weg der genannten Anschlussplatte (6) orthogonal zu ihrer Ebene zu begrenzen.

6. Lastkraftwagen (1) nach Anspruch 5, wobei die genannten Mittel (35, 36) zum Begrenzen des Wegs der genannten ersten Anschlussplatte (6) mindestens zwei Stäbe (35) aufweisen, die jeweils ein mit dem Fahrwerk (12) des Lastkraftwagens (1) verbundenes erstes Ende (35a), das ein mit einem Arretierungselement endendes Gewinde aufweist, und ein zweites Ende (35b) haben, das die Anschlussplatte (6) durchsetzt.

7. Lastkraftwagen (1) nach Anspruch 6, wobei die genannten Mittel (35, 36) zum Begrenzen des Wegs der ersten Anschlussplatte (6) jeweils eine auf dem Stab (35) gelagerte Laufbuchse aufweisen.

8. Wechsel-Aufbau (2) für einen Lastkraftwagen (1), der hydraulische Verbraucheraggregate und eine Mehrzahl von hydraulischen Schnellkupplungen (3b, 4b, 5b) zum Verbinden mit dem Hydraulikkreis des Lastkraftwagens (1) aufweist, **dadurch gekennzeichnet, dass** der Wechsel-Aufbau eine mit dem Fahrwerk (12) des Aufbaus (2) verbundene Platte (51) umfasst, die orthogonal in Bezug zur Ladefläche (π) des genannten Aufbaus (2) und orthogonal zu Längserstreckung des Aufbaus angeordnet ist, welche Platte die genannten Schnellkupplungen (3b, 4b, 5b) aufnimmt, und welche Platte (51) mit Zentriermitteln (52, 53, 54) versehen ist.

9. Aufbau nach Anspruch 8, wobei zum Dämpfen von Stößen und Erschütterungen an der Platte (51) orthogonal zu deren Ebene (π) Stoßdämpfermittel (25) vorgesehen sind.

10. Aufbau nach Anspruch 8 oder 9, wobei die Mittel weiterhin dazu ausgestattet sind, den Weg der Platte (51) orthogonal zu ihrer Ebene zu begrenzen.

11. Aufbau nach Anspruch 8, 9 oder 10, wobei die genannten Schnellkupplungen (3b, 4b, 5b) an der zweiten Platte (6) mit einer Stützrosette (41 b, 42b, 43b) ausgestattet sind.

12. Aufbau nach einem der vorhergehenden Ansprüche, wobei die Schnellkupplungen (3b, 4b, 5b) flache Stirnflächen aufweisende Schnellkupplungen sind.

13. Aufbau nach einem der vorhergehenden Ansprüche, wobei die genannte Platte (6) mit einer Schutzabdeckung (11) ausgestaltet ist, die mittels linearer (13) oder drehantreibbarer Aktoren verstellbar ist.

14. Verfahren zum Verbinden einer ersten Mehrzahl von Schnellkupplungen (3a, 4a, 5a), die mit in einen Lastkraftwagen (1) integrierten Fluid-Versorgungsmitteln verbunden sind, mit einer zweiten Mehrzahl von Schnellkupplungen (3b, 4b, 5b), die mit hydraulischen Verbraucheraggregaten eines Wechsel-Aufbaus (2) verbunden sind, umfassend die Schritte:
- Absenken eines Aufbaus (2) auf ein Fahrwerk (12) eines Lastkraftwagens (1);
- horizontales Verschieben des genannten Aufbaus (2) auf dem genannten Fahrwerk (12) des genannten Lastkraftwagens (1) bis der genannte Aufbau (2) mit dem genannten Fahrwerk (12) verbunden ist, **dadurch gekennzeichnet, dass** die genannte erste Mehrzahl von Schnellkupplungen (3a, 4a, 5a) während des erwähnten horizontalen Verschiebens mit der genannten zweiten Mehrzahl von Schnellkupplungen (3b, 4b, 5b) derart ausgerichtet gehalten wird, dass die Verbindung der genannten Schnellkupplungen (3a, 4a, 5a) des genannten Lastkraftwagens (1) mit den genannten Schnellkupplungen (3b, 4b, 5b) des genannten Aufbaus (2) während des letzten Abschnitts des horizontalen Wegs des Aufbaus (2) stattfindet.

## Revendications

1. Camion (1) en tant que moyen de transport à équipements interchangeables (2) comprenant un châssis (12) et une pluralité de moyens de raccords rapides (3a, 4a, 5a) pour le raccordement à des unités utilisant des vérins hydrauliques pour les équipements interchangeables (2) **caractérisés en qu'**il est équipé d'un plateau (6) fixé au châssis (12) dudit camion (1) ledit plateau (6) étant orthogonal au plan Π défini par le châssis (12) du camion, et parallèle aux axes du camion (1) ledit plateau logeant une pluralité de raccords à ouvertures rapides (3a, 4a, 5a) ledit plateau (6) disposant en outre des moyens de centrage (7,8, 9).

2. Camion (1) tel que revendiqué dans la revendication 1 où des moyens amortisseurs (25) sont prévus pour absorber chocs et vibrations du plateau (6) orthogonalement au plan de ce même plateau.

3. Camion (1) tel que revendiqué dans les revendications 1 ou 2 où lesdits raccords à ouverture rapide (3a, 4a, 5a) sont munis d'un alésage calibré en butée et en forme de collier (41a, 42a, 43a).

4. Camion (1) tel que revendiqué selon revendications 1 ou 2 ou 3 où lesdits raccords à ouverture rapide (3a, 4a, 5a) sont disposés à plat face aux raccords à ouverture rapide.

5. Camion (1) tel que revendiqué dans les revendications 1 à 4 où des moyens (35 et 36) sont prévus en outre pour réduire les coups de force sur ledit plateau (6) orthogonalement au plan du plateau lui-même.

6. Camion (1) tel que revendiqué dans la revendication 5 où les moyens (35 et 36) pour atténuer et limiter les coups sur ledit premier plateau (6) comprennent au moins deux tiges (35) chaque tige (35) ayant une première extrémité filetée (35a) fixée au châssis (12) dudit camion (1) et une extrémité munie d'une tige de verrouillage et une deuxième extrémité (35b) se prolongeant à travers le plateau (6).

7. Camion (1) tel que revendiqué dans la revendication 6, où lesdits moyens (35 et 36) pour atténuer et limiter les coups sur le premier plateau (6) comprennent une bague (36) montée sur chaque tige (35).

8. Equipement interchangeable (2) d'un camion (1) disposant d'unités utilisant des vérins hydrauliques et comprenant une pluralité de moyens de raccords hydrauliques à ouverture rapide (3b, 4b, 5b) pour la connexion au circuit hydraulique du camion, **caractérisé en ce qu'**il inclut un plateau (51) solidaire du châssis dudit équipement interchangeable (2) orthogonal par rapport au plan de chargement Π dudit équipement (2) orthogonal à l'extension longitudinale de l'équipement qui forme logement pour les moyens de raccords à ouverture rapide (3b,4ab,5b) ledit plateau étant muni de moyens de centrage (52,53,54).

9. Equipement tel que revendiqué dans la revendication 8 où des moyens amortisseurs de chocs (25) sont prévus pour absorber chocs et vibrations du plateau (51) orthogonalement au plan tel que revendiqué dans le plateau lui-même.

10. Equipement tel que revendiqué dans les revendications 8 ou 9 où des moyens sont fournis en plus pour réduire les coups du plateau (51) orthogonalement au plan dudit plateau lui-même.

11. Equipement tel que revendiqué dans les revendications 8,9 ou 10 où les raccords à ouverture rapide (3b, 4b, 5b) sont pourvus d'évidements de butée (41b, 42b, 43b).

12. Equipement tel que revendiqué selon l'une quelconque des revendications précédentes, où les éléments de raccords à ouverture rapide (3b, 4b, 5b) sont disposés à plat faisant face aux éléments de fixation rapides.

13. Equipement tel que revendiqué selon l'une quelconque des revendications précédentes, où le plateau (6) est pourvu d'un couvercle de protection (11), qui peut être actionné par dispositif linéaire ou rotatif.

14. Procédé pour l'accouplement primaire d'une pluralité d'éléments de raccords à ouverture rapide (3a, 4a, 5a) qui sont connectés au moyen d'une alimentation en fluide (s) intégré au camion (1) à une seconde pluralité d'éléments de raccords à ouverture rapide (3b, 4b, 5b), liés aux unités consommant la force des vérins hydrauliques d'un corps d'équipement interchangeable (2) comprenant les étapes suivantes :
- amener un corps d'élément (2) sur un châssis (12) d'un camion (1),
- translater horizontalement ledit corps d'élément (2) sur ledit châssis (12) dudit camion (1) jusqu'à ce que l'élément (2) dudit châssis (12) soit couplé, ce qui le **caractérise par** le maintien de ladite première pluralité d'éléments de raccords à ouverture rapide (3b,4b, 5b) alignés avec ladite deuxième pluralité d'éléments de raccords à ouverture rapide (3b, 4b, 5b) durant la translation horizontale de manière à ce que le raccordement des éléments de raccords à ouverture rapide (3a,4a,5a) dudit camion (1) avec lesdits éléments de raccords à ouverture rapide (3a,4a,5a) dudit corps d'élément (2) agissent au niveau de la dernière section des chocs horizontaux sur cet élément (2).
